# EUROPEAN PATENT APPLICATION

(11) **EP 4 769 660 A1**
(43) Date of publication of application: **01.07.2026**
(21) Application number: 25864562.1
(22) Date of filing: 30.09.2025
(51) Int. Cl.: H01M 10/6551, H01M 10/613, H01M 10/6554, H01M 50/172, H01M 50/502

(54) **CELL ASSEMBLY**

(30) Priority: 25.10.2024 KR 20240147379
(71) Applicant: LG ENERGY SOLUTION, LTD., Seoul 07335 (KR)
(72) Inventor: The designation of the inventor has not yet been filed
(74) Representative: Plasseraud IP
(86) International application number: PCT/KR2025/015461
(87) International publication number: WO 2026/089334

(57) **Abstract**

The present disclosure relates to a cell assembly including: a cell block including a plurality of battery cells with electrode leads protruding therefrom; a busbar frame including a busbar electrically connected to the electrode leads and coupled with the cell block; and at least one heat dissipation unit provided between the cell block and the busbar frame and including heat dissipation pins.

## Description

### [Technical Field]

The present disclosure relates to a cell assembly including a plurality of battery cells.

This application claims the benefit of priority from Korean Patent Application No. 10-2024-0147379, filed on October 25, 2024, the entire contents disclosed therein are incorporated by reference into this disclosure.

### [Background]

A secondary battery capable of charging and discharging is gaining attention as a power source for devices requiring high output and large capacity, including electric vehicles, hybrid electric vehicles, and plug-in hybrid electric vehicles, which are being proposed as a solution to air pollution caused by existing gasoline vehicles and diesel vehicles using fossil fuels.

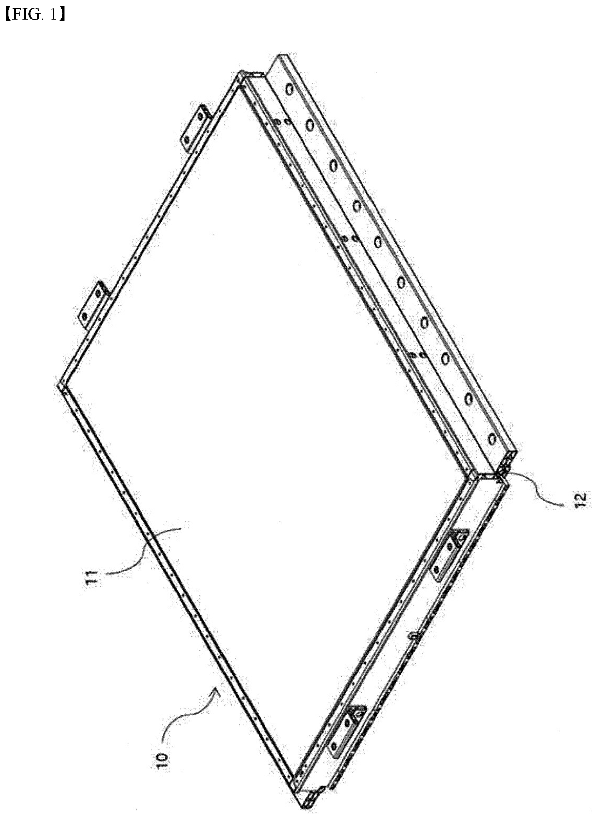

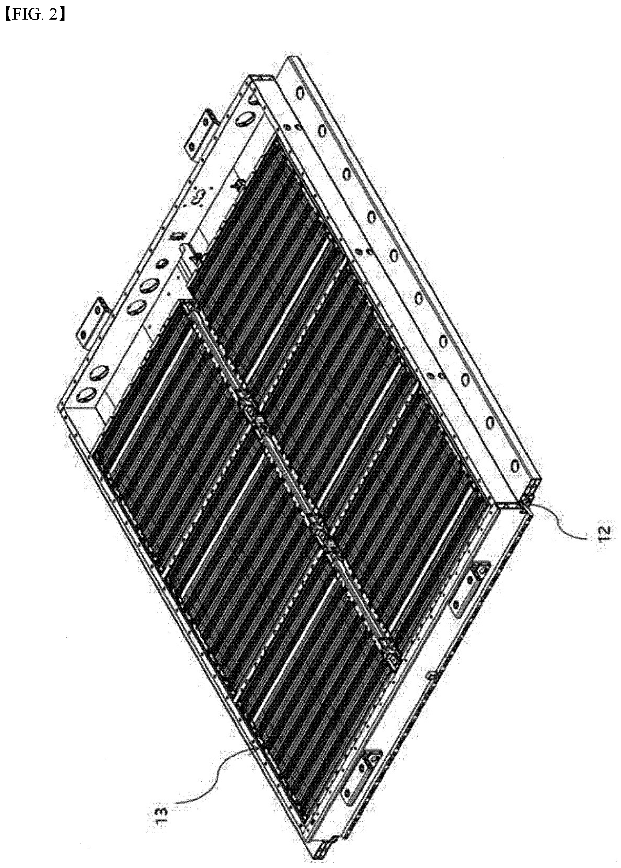

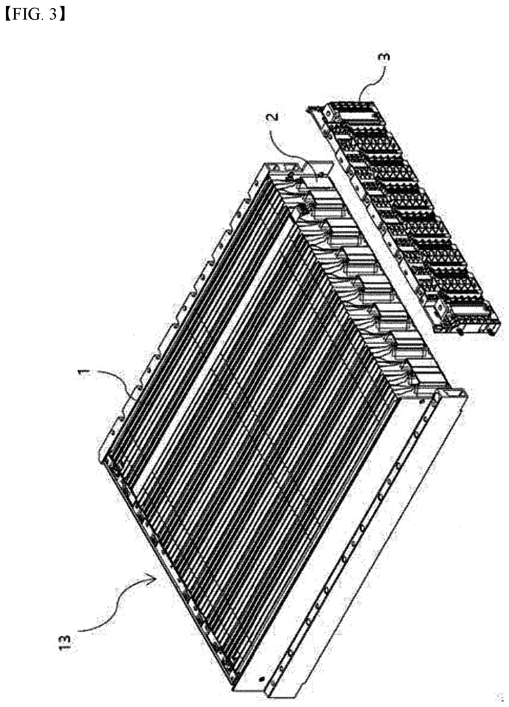

FIG. 1 is a perspective view of a conventional battery pack, FIG. 2 is a perspective view illustrating a cell assembly accommodated inside the battery pack of FIG. 1, and FIG. 3 is a perspective view of any one cell assembly shown in FIG. 2.

A conventional battery pack has a form in which a cell assembly including a plurality of battery cells is covered by a pack case and an upper case, as shown in FIG. 1 to FIG. 3.

One cell assembly has a form in which a plurality of battery cells with electrode leads protruding from at least one side are stacked in one direction, as shown in FIG. 3. Each battery cell included in the cell assembly is electrically connected to each other in a parallel or series method by being coupled with a busbar frame including a busbar that is electrically connected to the electrode leads.

The cell assembly of the above structure shows the highest temperature at a portion where the electrode leads and the busbar frame are coupled during repeated charging and discharging processes, and conventionally, a method of increasing thermal safety of the cell assembly by cooling such specific portions where heat is generated has been devised.

### [Summary]

### [Technical Problem]

Accordingly, the present disclosure has been devised to solve the above problems, and an object thereof is to provide a cell assembly having a structure capable of increasing thermal safety of a coupling portion between a battery cell and a busbar frame.

Other objects and advantages of the present disclosure may be understood by the following description, and will be more clearly understood by embodiments of the present disclosure. In addition, it will be easily understood that the objects and advantages of the present disclosure can be realized by means and combinations thereof indicated in the claims.

### [Technical Solution]

According to the present disclosure, there is provided a cell assembly including: a cell block including a plurality of battery cells with electrode leads protruding therefrom; a busbar frame including a busbar electrically connected to the electrode leads and coupled with the cell block; and at least one heat dissipation unit provided between the cell block and the busbar frame and including heat dissipation pins.

The heat dissipation pins may be formed corresponding to a direction in which the electrode leads of the battery cells protrude.

The heat dissipation pins may be formed to protrude in a longitudinal direction of the cell block.

The heat dissipation pins may be formed to face the electrode leads face to face.

The busbar frame may include pin insertion holes formed to allow the heat dissipation pins to be inserted therein, corresponding to positions of the heat dissipation pins, and the heat dissipation unit may be fixed to the busbar frame by inserting the heat dissipation pins into the pin insertion holes.

A heat exchange pad may be further provided on a rear surface of the heat dissipation unit, and the heat dissipation unit may be positioned such that one surface of the heat exchange pad contacts the cell block.

The heat dissipation unit may comprise: a base coupled to at least one of a front end and a rear end of the cell block; and at least one heat dissipation pin formed to protrude on the base, and the heat dissipation unit may be coupled to the cell block such that a protruding position of the heat dissipation pins is in an opposite direction to a position of the cell block.

The heat dissipation units may comprise a plurality of heat dissipation units, one heat dissipation pin is formed on each base of the plurality of heat dissipation units, and each base of the plurality of heat dissipation units may be coupled to the cell block by being spaced apart at a predetermined interval with the electrode leads of the cell block interposed therebetween.

The base may be formed with a width equal to or less than a spacing between respective electrode leads facing each other in any one pair of adjacent battery cells of the cell block.

The heat dissipation unit may comprise the heat dissipation unit with a plurality of heat dissipation pins formed on one base, and the base may be coupled to the cell block by allowing the electrode leads of the cell block to penetrate therethrough.

The base may extend corresponding to a direction in which the battery cells of the cell block are stacked, and the heat dissipation unit may include a plurality of heat dissipation pins formed on the base while being spaced apart at a predetermined interval.

The base may include opening holes formed between a pair of adjacent heat dissipation pins, and the heat dissipation unit may be coupled with the cell block such that the electrode leads of the cell block penetrate the opening holes.

### [Advantageous Effects]

According to the present disclosure, by solving the problem of high-temperature heat generated at a specific portion of a cell assembly, thermal safety of the cell assembly can be increased.

### [Brief Description of the Drawings]

FIG. 1 is a perspective view of a conventional battery pack.
FIG. 2 is a perspective view illustrating a cell assembly accommodated inside the battery pack of FIG. 1.
FIG. 3 is a perspective view of any one cell assembly shown in FIG. 2.
FIG. 4 is an exploded perspective view of a cell assembly according to a first embodiment of the present disclosure.
FIG. 5 is a plan view of the cell assembly of FIG. 4.
FIG. 6 is a perspective view of a heat dissipation unit used in the cell assembly of FIG. 4.
FIG. 7 is a front view of a plurality of heat dissipation units used in the cell assembly of FIG. 4.
FIG. 8 is a plan view of the heat dissipation unit of FIG. 7.
FIG. 9 is a modified example of the heat dissipation unit of FIG. 8.
FIG. 10 is a schematic diagram briefly illustrating an assembly process of the cell assembly of FIG. 4.
FIG. 11 is an exploded perspective view of a cell assembly according to a second embodiment of the present disclosure.
FIG. 12 is a perspective view of a heat dissipation unit used in the cell assembly of FIG. 11.
FIG. 13 is a front view of the heat dissipation unit of FIG. 12.
FIG. 14 is a plan view of the heat dissipation unit of FIG. 12.
FIG. 15 is a modified example of the heat dissipation unit of FIG. 14.
FIG. 16 is a schematic diagram briefly illustrating an assembly process of the cell assembly of FIG. 11.

### [Detailed Description]

Hereinafter, preferred embodiments of the present disclosure will be described in detail with reference to the accompanying drawings. Prior to this, terms and words used in the present specification should not be construed as limited to conventional or dictionary meanings and should be interpreted with the meaning and concept in accordance with the technical idea of the present disclosure based on the principle that the inventors can appropriately define the meanings of terms or words in order to explain the invention in the best way.

Therefore, it should be understood that the embodiments and drawings are merely examples of the present disclosure and do not represent all of the technical spirit of the present disclosure, and that there may be various equivalents and modifications that can replace them at the time of filing the present application.

In addition, when it is determined that detailed descriptions of known configurations or functions may obscure the gist of the present disclosure in describing the present disclosure, the detailed descriptions thereof are omitted.

Since the embodiments of the present disclosure are provided to more completely explain the present disclosure to a person skilled in the art, shapes and sizes of components in the drawings may be exaggerated, omitted, or schematically illustrated for clearer explanation. Therefore, the size or proportion of each component does not entirely reflect the actual size or proportion.

Similar reference numerals are used for similar components while describing each drawing. In the accompanying drawings, dimensions of structures are enlarged than actual for clarity of the present disclosure. Terms used to describe various components are for the purpose of understanding, and the components should not be limited by the terms. The terms are used only for the purpose of distinguishing one component from another component. For example, a first component could be termed a second component, and, similarly, a second component could be termed a first component, without departing from the scope of the present disclosure. Singular expressions include plural expressions unless the context clearly indicates otherwise.

In this specification, terms such as "include," "comprise," or "have" should be understood to specify the presence of features, numbers, steps, operations, components, or combinations thereof described in the specification, and should be understood as not precluding the presence or possibility of addition of one or more other features, numbers, steps, operations, components, or combinations thereof.

In addition, when a part of a layer, film, region, plate, or the like is disposed "on" another part, this includes not only a case in which one part is disposed "directly on" another part, but also a case in which still another part is interposed therebetween. In contrast, when a part of a layer, film, region, plate, or the like is disposed "under" another part, this includes not only a case in which one part is disposed "directly under" another part, but also a case in which still another part is interposed therebetween. In addition, being disposed "on" in the specification of the present disclosure may include a case in which it is disposed not only on the upper portion but also on the lower portion.

In the present disclosure, the term "slit" collectively refers to a through hole having a shape with a long axis having a long length in one direction and a short axis having a short length in a direction perpendicular to the long axis, and includes shapes such as rectangular, oval, or bead-shaped.

The present disclosure relates to a cell assembly, and the cell assembly of the present disclosure is characterized in that a heat dissipation unit for cooling is applied to a coupling portion between a battery cell and a busbar frame.

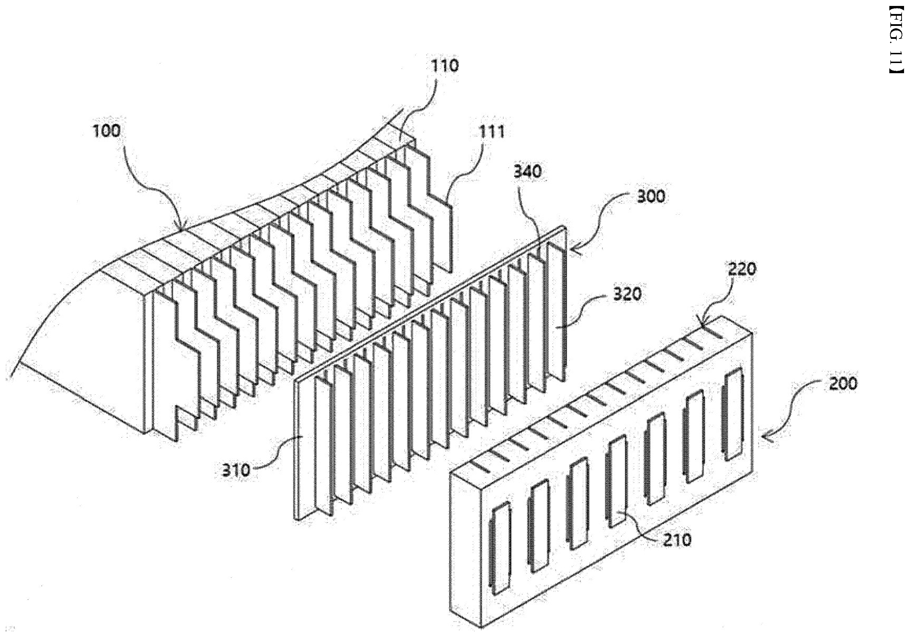

FIG. 1 to FIG. 10 relate to a cell assembly according to a first embodiment of the present disclosure, and FIG. 11 to FIG. 16 relate to a cell assembly according to a second embodiment of the present disclosure.

Hereinafter, specific embodiments of the cell assembly of the present disclosure will be described in detail with reference to the accompanying drawings. For reference, the directions of front, back, up, down, left, and right used in the following description to designate relative positions are for the purpose of understanding the disclosure and refer to the directions shown in the drawings unless otherwise specified.

(In addition, a longitudinal direction of a certain component refers to a direction corresponding to a surface having the longest length of the component shown in the drawings based on a horizontal direction, and a width direction of a certain component is defined to refer to a direction perpendicular to the longitudinal direction based on the horizontal direction.)

In the present disclosure, a width direction of the cell assembly refers to a direction in which the battery cells are stacked, and a longitudinal direction of the cell assembly is defined as referring to a direction perpendicular to the width direction of the cell assembly, that is, a direction connecting both sides to which the busbar frame is coupled.

### Cell Assembly

### (First Embodiment)

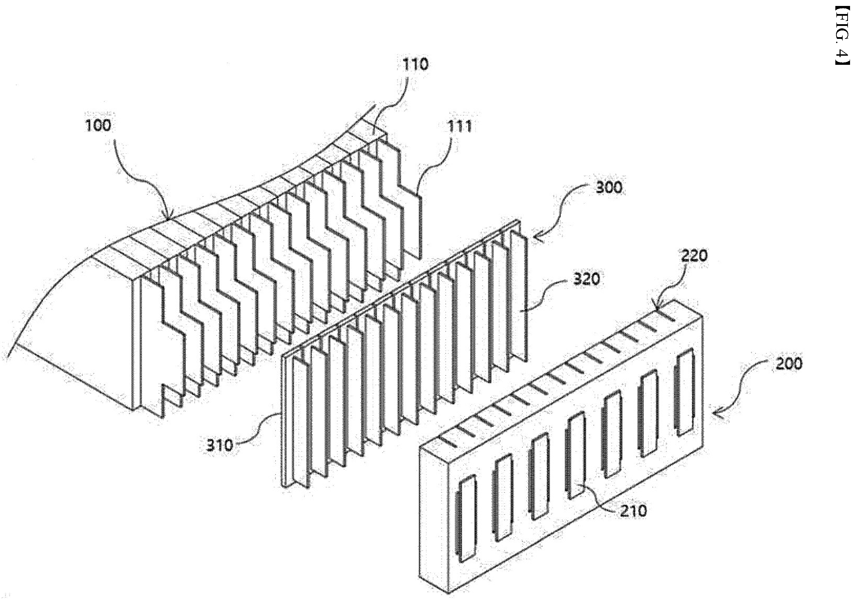

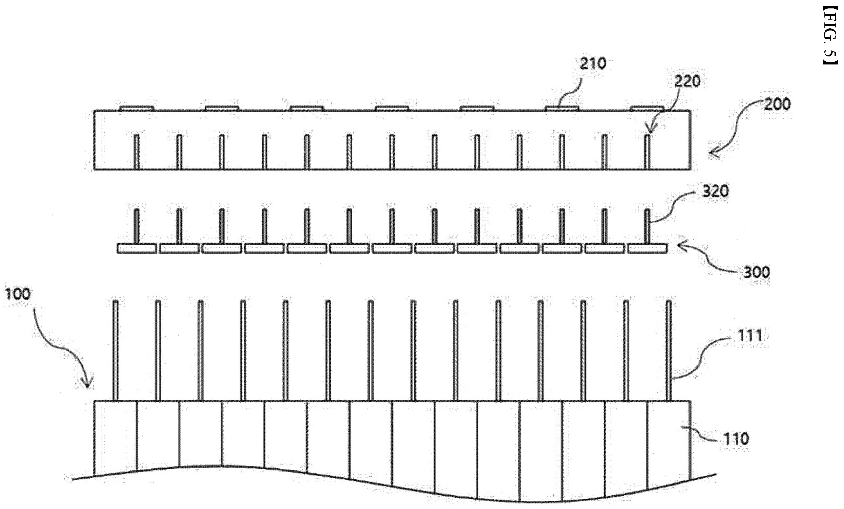

FIG. 4 is an exploded perspective view of a cell assembly according to a first embodiment of the present disclosure, and FIG. 5 is a plan view of the cell assembly of FIG. 4. (FIG. 4 and FIG. 5 illustrate only one side of the cell assembly for convenience of understanding.)

The cell assembly of the present disclosure includes a cell block 100 and a busbar frame 200.

The cell block 100 has a form in which a plurality of battery cells 110 are stacked in one direction.

Each of the battery cells 110 includes an electrode assembly in which electrodes and a separator are alternately stacked, an electrode lead 111 connected to the electrode, a case surrounding the electrode assembly such that the electrode lead 111 protrudes to the outside, and an electrolyte filled together with the electrode assembly in the case.

The busbar frame 200 includes a busbar frame 200 electrically connected by being coupled with the electrode leads 111 of the cell block 100, and is coupled to at least one of a front surface and a rear surface of the cell block 100.

The busbar frame 200 not only aligns by pressing each cell included in the cell block 100, but also serves to collect the electrode leads 111 protruding from each cell. Specifically, a conductive busbar frame 200 is fixedly provided on the busbar frame 200, and a plurality of electrode leads 111 drawn out from the cell block 100 are coupled to the busbar frame 200. At this time, the coupling of the electrode leads 111 and the busbar frame 200 can be typically performed by welding, but any coupling method capable of electrically connecting the electrode leads 111 and the busbar frame 200 can be utilized.

The cell assembly of the present disclosure is characterized in that it includes a heat dissipation unit 300 provided between the cell block 100 and the busbar frame 200, as shown in FIG. 4 and FIG. 5.

The heat dissipation unit 300 includes a heat dissipation pin 320 formed corresponding to a direction in which the electrode leads 111 of the battery cells 110 protrude, and dissipates heat generated from the cell block 100 through the heat dissipation pin 320. More specifically, the heat dissipation pin 320 is formed to protrude in a longitudinal direction of the cell block 100 and is formed to extend in a thickness direction of the cell block 100, as shown in FIG. 4 and FIG. 5. That is, the heat dissipation pin 320 is arranged to face the electrode leads 111 face to face.

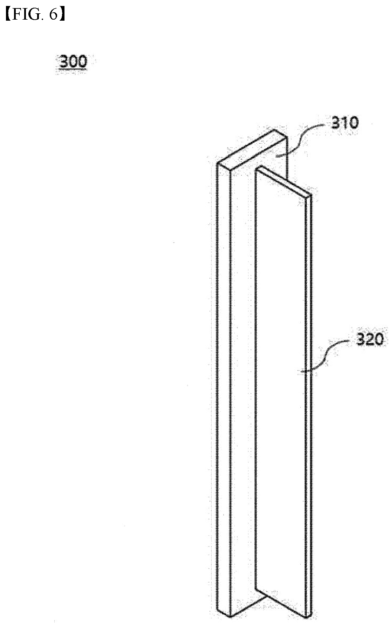

FIG. 6 is a perspective view of the heat dissipation unit 300 used in the cell assembly of FIG. 4.

The heat dissipation unit 300 comprises a base 310 and at least one heat dissipation pin 320 formed to protrude on the base 310.

The base 310 serves to support the heat dissipation pin 320 such that the heat dissipation pin 320 maintains an upright state in a forward direction while facing the electrode leads 111.

The base 310 is a portion directly coupled to the cell block 100, and is coupled to at least one of a front end and a rear end of the cell block 100.

The heat dissipation unit 300 is coupled to the cell block 100 such that a protruding position of the heat dissipation pin 320 is in the opposite direction to the position of the cell block 100.

The cell assembly according to the first embodiment includes a plurality of heat dissipation units 300 in which one heat dissipation pin 320 is formed on the base 310.

The plurality of heat dissipation units 300 are positioned between any one pair of adjacent battery cells 110.

Specifically, the base 310 is positioned between the electrode leads 111 of the cell block 100, as shown in FIG. 4 and FIG. 5.

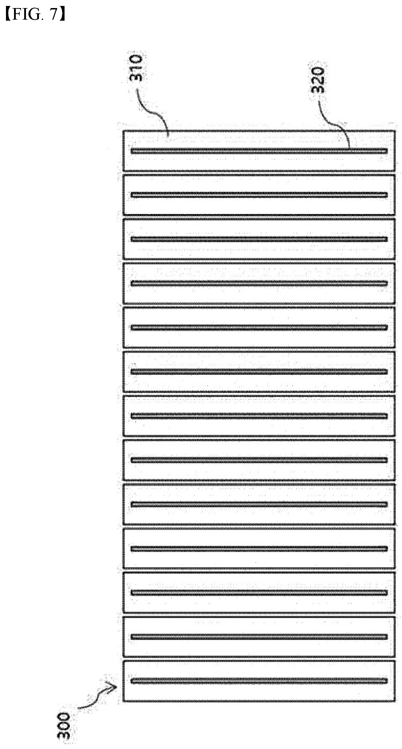

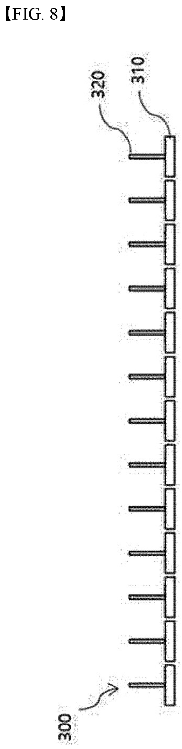

FIG. 7 is a front view of the plurality of heat dissipation units 300 used in the cell assembly of FIG. 4, and FIG. 8 is a plan view of the heat dissipation units 300 of FIG. 7.

The plurality of heat dissipation units 300 are spaced apart at a predetermined interval and coupled with the cell block 100, as shown in FIG. 7 to FIG. 8. Specifically, the base 310 is coupled with the cell block 100 by being spaced apart at a predetermined interval with the electrode leads 111 of the cell block 100 interposed therebetween.

Therefore, the base 310 is formed with a width equal to or less than a spacing between respective electrode leads 111 facing each other in any one pair of adjacent battery cells 110 of the cell block 100. At this time, when the width of the base 310 exceeds the spacing between the electrode leads 111, the base 310 contacts the electrode leads 111 and cannot be properly attached to the cell block 100.

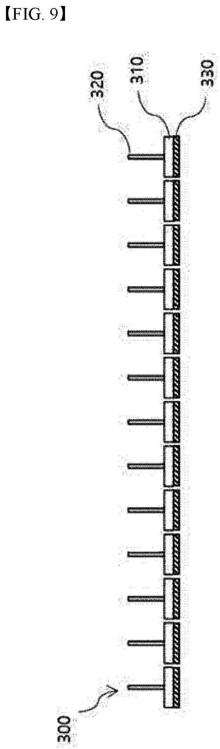

FIG. 9 is a modified example of the heat dissipation unit 300 of FIG. 8.

The heat dissipation unit 300 of the present disclosure may further include a heat exchange pad 330 to more smoothly absorb heat from the cell block 100.

Referring to FIG. 9, the heat exchange pad 330 is attached to a rear surface of the base 310 of the plurality of heat dissipation units 300 spaced apart at a predetermined interval.

The heat exchange pad 330 is made of silicone or polymer material including a thermal conductivity filler or the like.

The heat dissipation unit 300 is coupled with the cell block 100 such that one surface of the heat exchange pad 330 contacts the cell block 100.

The busbar frame 200 of the present disclosure includes pin insertion holes 220 formed to allow the heat dissipation pins 320 to be inserted therein, corresponding to positions of the heat dissipation pins 320, as shown in FIG. 4 and FIG. 5.

The pin insertion holes 220 are formed with a depth such that the heat dissipation pins 320 of the heat dissipation unit 300 can be completely inserted when the busbar frame 200 is fully coupled to the cell block 100.

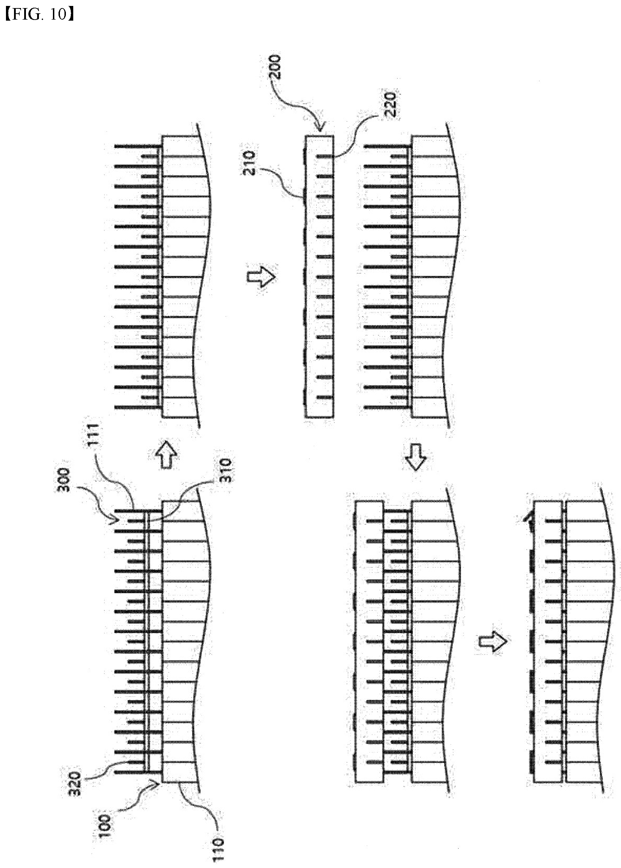

FIG. 10 is a schematic diagram briefly illustrating an assembly process of the cell assembly of FIG. 4.

Referring to FIG. 10, the plurality of heat dissipation units 300 are inserted into spaces between the electrode leads 111 of each battery cell 110 and seated to contact the battery cells 110. The busbar frame 200 is coupled with the cell block 100 such that the heat dissipation pins 320 of each heat dissipation unit 300 are positioned to correspond to the pin insertion holes 220, and at this time, the electrode leads 111 penetrate openings of the busbar frame 200 and contact the busbar.

The heat dissipation pins 320 of the heat dissipation unit 300 are interposed between the cell block 100 and the busbar frame 200 while maintaining an upright state perpendicular to a longitudinal direction of the busbar frame 200 without being bent.

The cell assembly of the present disclosure can effectively dissipate heat by transferring some of the heat to the heat dissipation unit 300 even when high-temperature heat is generated at one side of the cell block 100 as charging and discharging continues.

### (Second Embodiment)

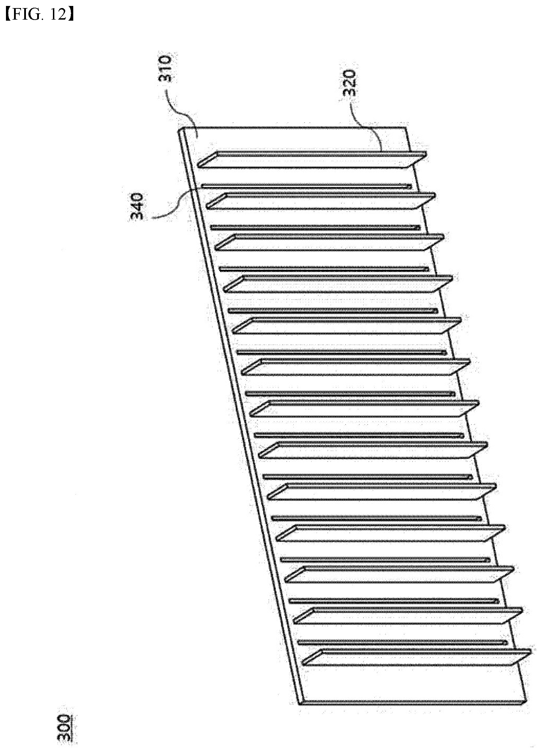

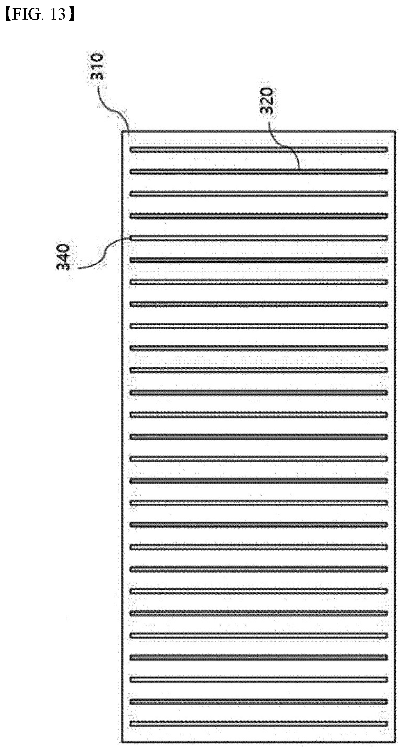

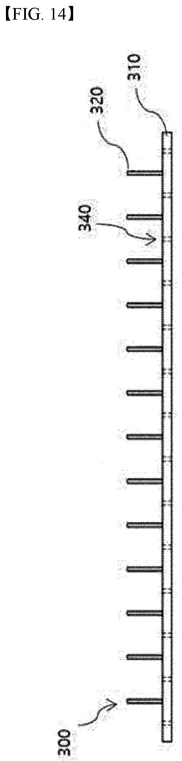

FIG. 11 is an exploded perspective view of a cell assembly according to a second embodiment of the present disclosure, FIG. 12 is a perspective view of a heat dissipation unit 300 used in the cell assembly of FIG. 11, FIG. 13 is a front view of the heat dissipation unit 300 of FIG. 12, and FIG. 14 is a plan view of the heat dissipation unit 300 of FIG. 12. (FIG. 11 illustrates only one side of the cell assembly for convenience of understanding.)

The cell assembly according to the second embodiment includes a heat dissipation unit 300 in which a plurality of heat dissipation pins 320 are formed on one base 310.

The base 310 extends corresponding to a direction in which the battery cells 110 of the cell block 100 are stacked, as shown in FIG. 11 to FIG. 14.

The plurality of heat dissipation pins 320 are positioned to be spaced apart at a predetermined interval on the base 310.

The base 310 includes opening holes 340 formed between any one pair of adjacent heat dissipation pins 320, and the heat dissipation unit 300 is coupled with the cell block 100 such that the electrode leads 111 of the cell block 100 penetrate the opening holes 340.

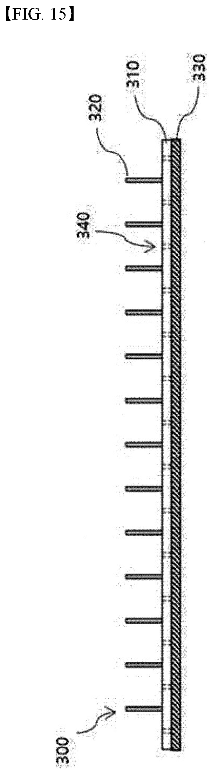

FIG. 15 is a modified example of the heat dissipation unit 300 of FIG. 14.

The heat dissipation unit 300 of the present disclosure may further include a heat exchange pad 330 to more smoothly absorb heat from the cell block 100.

Referring to FIG. 15, the heat exchange pad 330 is attached to an entire rear surface of the base 310.

The heat exchange pad 330 is made of silicone or polymer material including a thermal conductivity filler or the like.

The heat dissipation unit 300 is coupled with the cell block 100 such that one surface of the heat exchange pad 330 contacts the cell block 100.

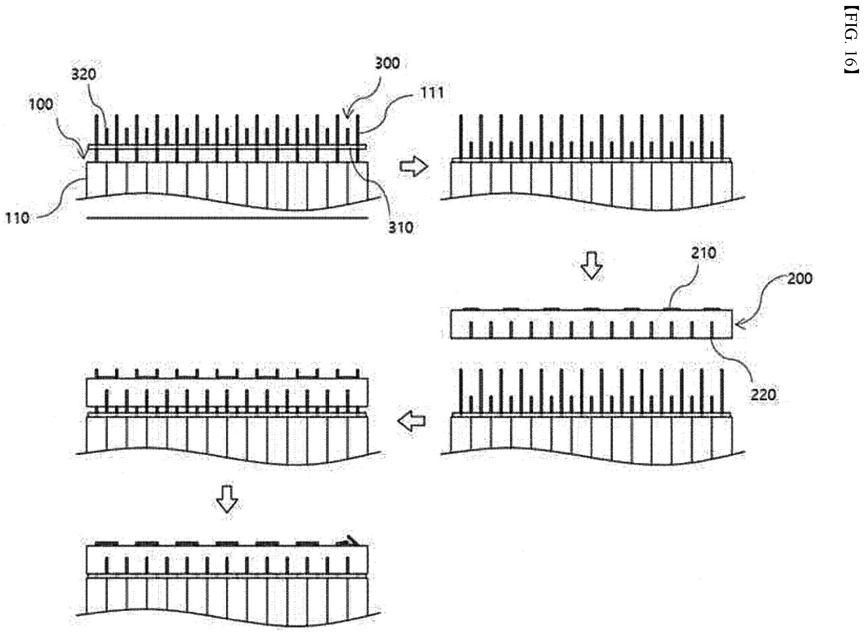

FIG. 16 is a schematic diagram briefly illustrating an assembly process of the cell assembly of FIG. 11.

Referring to FIG. 16, one heat dissipation unit 300 is coupled with the cell block 100 by allowing the electrode leads 111 to penetrate the opening holes 340. The busbar frame 200 is coupled with the cell block 100 such that each heat dissipation pin 320 is positioned to correspond to the pin insertion holes 220, and at this time, the electrode leads 111 penetrate openings of the busbar frame 200 and contact the busbar frame 200.

The heat dissipation pins 320 of the heat dissipation unit 300 are interposed between the cell block 100 and the busbar frame 200 while maintaining an upright state perpendicular to a longitudinal direction of the busbar frame 200 without being bent.

As described above, the present disclosure has been described in more detail through drawings and embodiments. However, it should be understood that the configurations described in the drawings or the embodiments described in the present specification are merely one embodiment of the present disclosure and do not represent all of the technical ideas of the present disclosure, so various equivalents and modifications may exist that can substitute for these at the time of filing the present application.

### [Description of Reference Numerals]

1: (prior art) battery cell
2: (prior art) electrode lead
3: (prior art) busbar frame
10: (prior art) battery pack
11: (prior art) upper case
12: (prior art) pack case
13: (prior art) cell assembly
100: cell block
110: battery cell
111: electrode lead
200: busbar frame
210: busbar
220: pin insertion hole
300: heat dissipation unit
310: base
320: heat dissipation pin
330: heat exchange pad
340: opening hole

## Claims

1. A cell assembly comprising:
a cell block comprising a plurality of battery cells with electrode leads protruding therefrom;
a busbar frame comprising a busbar electrically connected to the electrode leads and coupled with the cell block; and
at least one heat dissipation unit provided between the cell block and the busbar frame and comprising heat dissipation pins.

2. The cell assembly of claim 1, wherein the heat dissipation pins are formed corresponding to a direction in which the electrode leads of the battery cells protrude.

3. The cell assembly of claim 1, wherein the heat dissipation pins are formed to protrude in a longitudinal direction of the cell block.

4. The cell assembly of claim 1, wherein the heat dissipation pins are formed to face the electrode leads face to face.

5. The cell assembly of claim 1, wherein the busbar frame comprises pin insertion holes formed to allow the heat dissipation pins to be inserted therein, corresponding to positions of the heat dissipation pins; and
wherein the heat dissipation unit is fixed to the busbar frame by inserting the heat dissipation pins into the pin insertion holes.

6. The cell assembly of claim 1, wherein a heat exchange pad is further provided on a rear surface of the heat dissipation unit; and
wherein the heat dissipation unit is positioned such that one surface of the heat exchange pad contacts the cell block.

7. The cell assembly of claim 1, wherein the heat dissipation unit comprises:
a base coupled to at least one of a front end and a rear end of the cell block; and
at least one heat dissipation pin formed to protrude on the base; and
wherein the heat dissipation unit is coupled to the cell block such that a protruding position of the heat dissipation pins is in an opposite direction to a position of the cell block.

8. The cell assembly of claim 7, wherein the heat dissipation units comprising a plurality of heat dissipation units, one heat dissipation pin is formed on each base of the plurality of heat dissipation units, wherein each base of the plurality of heat dissipation units is coupled to the cell block by being spaced apart at a predetermined interval with the electrode leads of the cell block interposed therebetween.

9. The cell assembly of claim 8, wherein the base is formed with a width equal to or less than a spacing between respective electrode leads facing each other in any one pair of adjacent battery cells of the cell block.

10. The cell assembly of claim 7, wherein the heat dissipation unit comprises the heat dissipation unit with a plurality of heat dissipation pins formed on one base, wherein the base is coupled to the cell block by allowing the electrode leads of the cell block to penetrate therethrough.

11. The cell assembly of claim 10, wherein the base extends corresponding to a direction in which the battery cells of the cell block are stacked; and
wherein the heat dissipation unit comprises a plurality of heat dissipation pins formed on the base while being spaced apart at a predetermined interval.

12. The cell assembly of claim 11, wherein the base comprises opening holes formed between a pair of adjacent heat dissipation pins; and
wherein the heat dissipation unit is coupled with the cell block such that the electrode leads of the cell block penetrate the opening holes.
